(19) Europäisches Patentamt
European Patent Office
Office européen des brevets

(11) EP 4 174 879 A1

(12) EUROPEAN PATENT APPLICATION
published in accordance with Art. 153(4) EPC

(43) Date of publication:
03.05.2023 Bulletin 2023/18

(21) Application number: 21949521.5

(22) Date of filing: 04.11.2021

(51) International Patent Classification (IPC):
H01B 7/14 (2006.01)

(52) Cooperative Patent Classification (CPC):
Y02A 30/14

(86) International application number:
PCT/CN2021/128802

(87) International publication number:
WO 2023/040020 (23.03.2023 Gazette 2023/12)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 14.09.2021 CN 202111076138

(71) Applicant: Zhongtian Technology Submarine
Cable Co., Ltd.
Nantong, Jiangsu 226000 (CN)

(72) Inventors:
• WANG, Liyuan
Jiangsu 226000 (CN)
• XUE, Chi
Jiangsu 226000 (CN)
• HU, Ming
Jiangsu 226000 (CN)
• WANG, Haiyang
Jiangsu 226000 (CN)

• WANG, Wenchao
Jiangsu 226000 (CN)
• NIE, Ying
Jiangsu 226000 (CN)
• SUN, Yanyu
Jiangsu 226000 (CN)
• ZHAO, Youlin
Jiangsu 226000 (CN)
• ZHANG, Hongliang
Jiangsu 226000 (CN)
• ZHANG, Yiliang
Jiangsu 226000 (CN)
• DU, Qiang
Jiangsu 226000 (CN)
• LIU, Lei
Jiangsu 226000 (CN)
• WANG, Haitao
Jiangsu 226000 (CN)
• JIN, Xingyu
Jiangsu 226000 (CN)

(74) Representative: Boult Wade Tennant LLP
Salisbury Square House
8 Salisbury Square
London EC4Y 8AP (GB)

(54) SUBMARINE CABLE

(57) The present invention provides a submarine cable, which relates to the field of cable technology. The submarine cable includes a plurality of core wires that are stranded together; the core wire includes a first metal wire and a conductive layer wrapping the first metal wire; an electrical conductivity of the conductive layer is greater than an electrical conductivity of the first metal wire.

By the above settings, when the submarine cable is energized with alternating current (AC), the current concentrated on a surface part of the first metal wire will be partially transferred to the conductive layer, thereby improving through-current capability of the surface part of the first metal wire, reducing AC resistance of the first metal wire, and reducing power loss.

EP 4 174 879 A1

FIG. 1

**Description**

The present application claims priority to Chinese Patent Application No. 202111076138.6, filed with China National Intellectual Property Administration on September 14, 2021, titled "Submarine Cable", which is hereby incorporated by reference in its entirety.

**TECHNICAL FIELD**

The present invention relates to the technology of cables, and in particular, to a submarine cable.

**BACKGROUND**

Submarine cables are current carrying equipment for power transmission on the seabed, which can be used for power supply of an offshore drilling platform, an offshore island, etc. Generally, a submarine cable includes a submarine cable section, a landing cable section, and a joint connecting the submarine cable section and the landing cable section. The submarine cable section refers to a part of the submarine cable located in a deep-water section, and the landing cable section refers to a part of the submarine cable located between nearshore shallow water and a beach joint.

In related arts, the submarine cable includes a cable core, an armor layer, and an outer sheath. The cable core includes a plurality of metal wires that are stranded together, and a water-blocking medium filled in a strand gap between metal wires; the armor layer is arranged to wrap the cable core, and the outer sheath is arranged to wrap the armor layer.

However, when the submarine cable is energized with alternating current (AC), the metal wire of the cable core will have skin effect, which will increase resistance of the metal wire and lead to increased power loss.

**SUMMARY**

The present invention provides a submarine cable, which includes a plurality of core wires that are stranded together; each of the core wires includes a first metal wire and a conductive layer wrapping the first metal wire; an electrical conductivity of the conductive layer is greater than an electrical conductivity of the first metal wire.

The technical effect of the present invention is that by wrapping the first metal wire with the conductive layer and the electrical conductivity of the conductive layer is greater than the electrical conductivity of the first metal wire, the current concentrated on a surface part of the first metal wire will be partially transferred to the conductive layer when the submarine cable is energized with alternating current (AC), thereby improving through-current capability of the surface part of the first metal wire, reducing AC resistance of the first metal wire, and reducing power loss.

**BRIEF DESCRIPTION OF DRAWINGS**

FIG. 1 is a sectional view of a core wire according to an embodiment of the present invention.
FIG. 2 is a sectional view of a single-core submarine cable according to an embodiment of the present invention.
FIG. 3 is a sectional view of a three-core submarine cable according to an embodiment of the present invention.
FIG. 4 is a sectional view of an armor layer according to an embodiment of the present invention.

In the drawings:
11- First metal wire; 12- Conductive layer; 13- Water-blocking medium; 21-Conductor shield layer; 22- Insulation layer; 23- Insulation shield layer; 24- Longitudinal water-blocking layer; 25- Metal shield layer; 26- Non-metallic sheath layer; 27- Optical unit filling layer; 28- Inner bedding layer; 29- Outer serving layer; 30- Armor layer; 31- Armored metal wire; 32- Sheath; 41- Optical unit.

**DESCRIPTION OF EMBODIMENTS**

The specific embodiments of the present invention are described in detail below in combination with the accompanying drawings. It should be understood that the specific embodiments described herein are only used to describe and explain the present invention, and the present invention is not limited to the following specific implementation manners.

Submarine cables are current carrying equipment for power transmission on the seabed, which can be used for power supply of an offshore drilling platform, an offshore island, etc. Generally, a submarine cable includes a submarine cable section, a landing cable section, and a joint connecting the submarine cable section and the landing cable section. The submarine cable section refers to a part of the submarine cable located in a deep-water section, and the landing cable section refers to a part of the submarine cable located between nearshore shallow water and a beach joint.

In related arts, the submarine cable includes a cable core, an armor layer, and an outer sheath. The cable core includes a plurality of metal wires that are stranded together, and a water-blocking medium filled in a strand gap between metal wires; the armor layer is arranged to wrap the cable core, and the outer sheath is arranged to wrap the armor layer.

However, when the submarine cable is energized with alternating current (AC), the metal wire of the cable core will have skin effect, which will increase resistance of the metal wire and lead to increased power loss.

The skin effect refers to that when the submarine cable is energized with alternating current, the current inside the metal wire of the cable core is unevenly distributed, and the current is concentrated in a "skin" part of the metal wire, that is, the current is concentrated in a thin layer of the surface of the metal wire. The closer to the surface of the metal wire, the greater the current density. The current inside the metal wire is actually small, which increases the resistance of the metal wire, thus increasing the power loss. For this reason, the inventors of the present disclosure want to solve the problem in the following ways: a first way is to divide the metal wire into several mutually insulated independent parts to increase an equivalent surface area of the metal wire, thereby reducing the skin effect, but an effect of resistance reduction is not obvious; a second way is to divide the metal wire into several sector blocks with equal area, and an insulation paper for the cable is provided between two adjacent sector blocks for isolation, however, this way cannot meet a requirement of longitudinally blocking water for the submarine cable; a third way is to use a metal with high electrical conductivity for the metal wire, for example, a metal wire made of silver, however, as the silver is highly-expensive, such submarine cable is of weak competitiveness.

In view of this, in the present disclosure, a conductive layer with higher electrical conductivity is wrapped on the metal wire, thereby reducing resistance of the surface layer. Therefore, even if the core wire still has skin effect, the power loss can be reduced.

The submarine cable provided in the present invention is described in detail below in combination with specific embodiments.

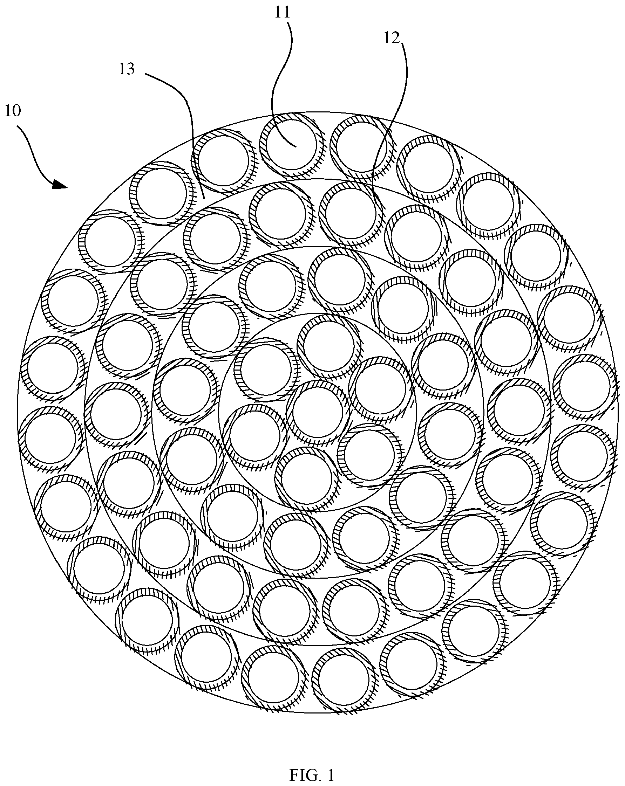

FIG. 1 is a sectional view of a core wire according to a present embodiment.

As shown in FIG. 1, the present embodiment provides a submarine cable, including a plurality of core wires 10 that are stranded together; the core wire 10 includes a first metal wire 11 and a conductive layer 12 wrapping the first metal wire 11; an electrical conductivity of the conductive layer 12 is greater than an electrical conductivity of the first metal wire 11.

The plurality of core wires 10 that are stranded together can improve an effective current carrying capacity of the submarine cable.

When the submarine cable is energized with alternating current, a surface layer of the core wire 10 including the first metal wire 11 and the conductive layer 12 has skin effect, since the electrical conductivity of the conductive layer 12 is greater than the electrical conductivity of the first metal wire 11, a current density of the conductive layer 12 is greater than a current density of a surface layer of the first metal wire 11, thereby reducing the resistance of the first metal wire 11 and reducing the power loss of the first metal wire 11.

The conductive layer 12 can be wrapped on the first metal wire 11 by an electroplating method.

It should be noted that the submarine cable including the core wire 10 of the present embodiment can be a single-core submarine cable or a three-core submarine cable.

In an optional implementation manner, the first metal wire 11 is formed by copper or aluminum; the conductive layer 12 is a silver-plating layer. Through the above settings, the skin effect can be improved, and manufacturing costs of the submarine cable can be reduced.

It should be noted that the first metal wire 11 can be formed by other metals besides the above-mentioned copper or aluminum, for example, the first metal wire 11 is formed by silver, and correspondingly, the conductive layer 12 is formed by a material with higher electrical conductivity than the electrical conductivity of silver.

The silver-plating layer can be arranged on the first metal wire 11 by the above electroplating method.

In an optional implementation manner, the first metal wire 11 has a diameter of 2 mm to 5 mm; the conductive layer 12 has a thickness of 0.01 mm to 0.003 mm. Adopting the conductive layer 12 within the above value range, the conductive layer 12 will not fall off during a pressing and stranding process of the core wire 10.

As shown in FIG. 1, in an optional implementation manner, further included is a water-blocking medium 13 that is filled in a strand gap between stranded core wires 10. The setting of the water-blocking medium 13 enables the submarine cable to have longitudinal water-blocking performance.

Optionally, the water-blocking medium 13 is at least one of a water-blocking tape, a water-blocking yarn, a water-blocking glue, or a water-blocking powder, so that the submarine cable can achieve a role of blocking water in a longitudinal direction and reduce a possibility of the core wire contacting sea water when an outer layer of the submarine cable is damaged.

The water-blocking tape includes a semi-conducting water-blocking tape and an insulation water-blocking tape. For example, the semi-conducting water-blocking tape is formed by composition of semi-conducting non-woven fabric and super absorbent resin.

The water-blocking yarn is mainly formed by composition of polyester industrial filament and cross-linked polyacrylic acid expansion material.

The water-blocking powder can be super absorbent resin.

It should be pointed out that the water-blocking medium 13 can be a combination of the water-blocking tape and the water-blocking yarn, or a combination of the water-blocking tape and the water-blocking glue, or even a combination of the water-blocking glue, the water-blocking tape and the water-blocking yarn.

Due to an undulation of submarine topography, submarine cables at different positions have different depths. Thus, in the present disclosure, along a length direction of the core wire 10, the submarine cable includes a deep-water section for placement in deep water and a shallow-water section for placement in shallow water. The strand gap between stranded core wires 10 in the deep-water section and the strand gap between stranded core wires 10 in the shallow-water section are filled with different water-blocking mediums 13, so that the longitudinal water-blocking performance of the submarine cable in each section can meet the requirements while reducing the cost.

It should be noted that in the present embodiment, an area with seawater depth less than 500 meters is defined as a shallow-water area, and the part of the submarine cable in this area is the shallow-water section as mentioned above; an area with seawater depth greater than 500 meters is defined as a deep-water area, and the part of the submarine cable in this area is the deep-water section as mentioned above.

Schematically, a strand gap between stranded core wires 10 in the deep-water section is filled with a water-blocking glue; a strand gap between stranded core wires 10 in the shallow-water section is filled with at least one of the water-blocking tape, the water-blocking yarn, or the water-blocking powder.

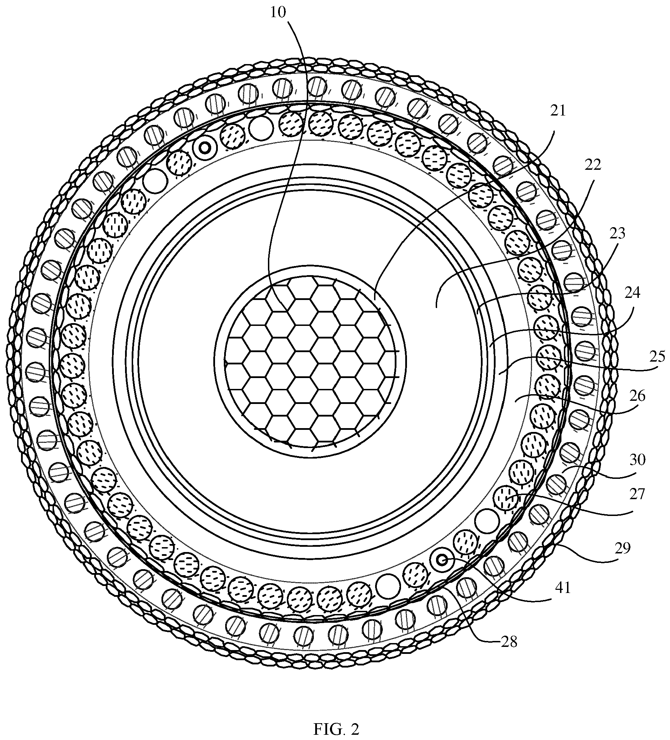

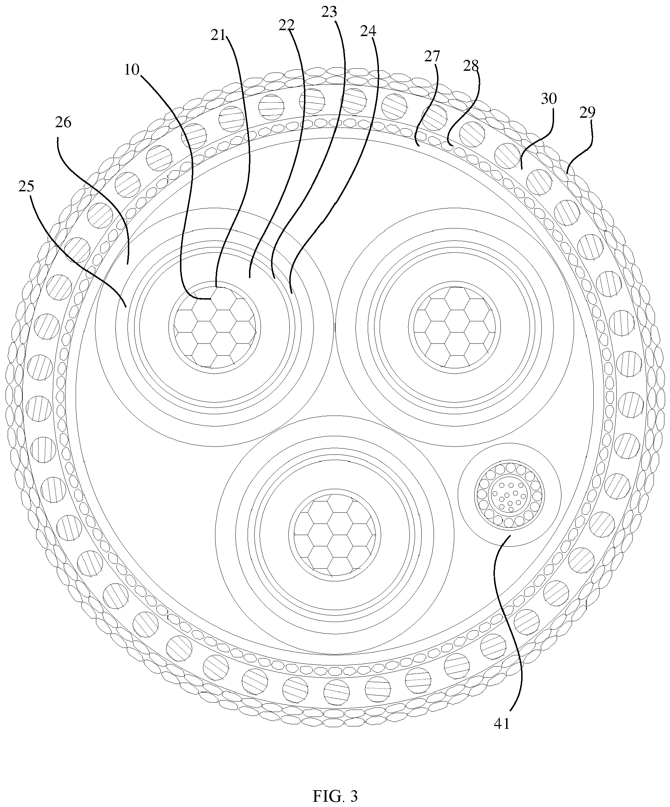

FIG. 2 is a sectional view of a single-core submarine cable according to a present embodiment; FIG. 3 is a sectional view of a three-core submarine cable according to a present embodiment.

As shown in FIG. 2 and FIG. 3, the submarine cable further includes a conductor shield layer 21 wrapping the stranded core wires 10, an insulation layer 22 wrapping the conductor shield layer 21, an insulation shield layer 23 wrapping the insulation layer 22, a longitudinal water-blocking layer 24 wrapping the insulation shield layer 23, a metal shield layer 25 wrapping the longitudinal water-blocking layer 24, a non-metallic sheath layer 26 wrapping the metal shield layer 25, an optical unit filling layer 27 wrapping the non-metallic sheath layer 26, and an inner bedding layer 28 wrapping the optical unit filling layer 27.

It should be noted that the conductor shield layer 21, the insulation layer 22, the insulation shield layer 23, the longitudinal water-blocking layer 24, the metal shield layer 25, the non-metallic sheath layer 26, the optical unit filling layer 27, and the inner bedding layer 28 are arranged sequentially from inside to outside along a radial direction of the core wire 10.

As shown in FIG. 2 and FIG. 3, each of the conductor shield layer 21, the insulation layer 22, the insulation shield layer 23, the longitudinal water-blocking layer 24, the metal shield layer 25, the non-metallic sheath layer 26, the optical unit filling layer 27, and the inner bedding layer 28 is a tubular structure.

Schematically, the conductor shield layer 21 is formed by semi-conducting polyethylene or semi-conducting polypropylene, and the semi-conducting polyethylene or the semi-conducting polypropylene is extruded outside the core wires 10 to wrap the core wires 10; or, the conductor shield layer 21 is formed by a combination of a water-blocking tape and a semi-conducting polyethylene material or a combination of a water-blocking tape and a semi-conducting polypropylene material, and the water-blocking tape is lapped outside the stranded core wires 10.

The insulation layer 22 is formed by cross-linked polyethylene or polypropylene, the cross-linked polyethylene or polypropylene is extruded outside the conductor shield layer 21 to wrap the conductor shield layer 21.

The insulation shield layer 23 is formed by semi-conducting polyethylene or semi-conducting polypropylene, and the insulation shield layer 23 is extruded outside the insulation layer 22 to wrap the insulation layer 22.

The longitudinal water-blocking layer 24 is formed by a semi-conducting water-blocking tape, and the longitudinal water-blocking layer 24 is lapped outside the insulation shield layer 23 to wrap the insulation shield layer 23.

The metal shield layer 25 is formed by aluminum alloy, the aluminum alloy is extruded outside the longitudinal water-blocking layer 24 to wrap the longitudinal water-blocking layer 24; or the metal shield layer 25 is formed by a copper tape or a combination of a copper wire and the copper tape. The copper tape is lapped outside the longitudinal water-blocking layer 24 to wrap the longitudinal water-blocking layer 24, and the copper wire is wound around the longitudinal water-blocking layer 24.

The non-metallic sheath layer 26 is formed by semi-conducting polyethylene, or insulation polyethylene, or a combination of a composite aluminum-plastic tape and insulation polyethylene, or a combination of a composite copper-plastic tape and insulation polyethylene. The non-metallic sheath layer 26 is extruded outside the metal shield layer 25.

It should be noted that the insulation polyethylene is a tubular structure and can be extruded outside the metal shield layer 25 to wrap the metal shield layer 25.

The optical unit filling layer 27 is formed by an annular polyethylene strip.

The inner bedding later 28 is a polypropylene (PP) rope wound around the optical unit filling layer 27.

It should be noted that the diameter of the optical unit filling layer 27 is the same as or similar to the diameter of the optical unit 41. For example, the diameter of the optical unit filling layer 27 is 2mm smaller than the diameter of the optical unit 41.

As shown in FIG. 2, optionally, an armor layer 30 wrapping the inner bedding layer 28 is further included, and the armor layer located in the shallow-water section and the armor layer located in the deep-water section are both stranded by a plurality of armored metal wires 31. The armored metal wires 31 used in the armor layer 30 of the deep-water section outnumber the armored metal wires 31 used in the armor layer 30 of the shallow-water section. Through the above settings, the number of armored metal wires 31 can be reduced, so as to reduce the weight of the armor layer 30, to reduce the weight of the submarine cable, and also reduce material costs of armored metal wires 31 and the working time of disc changing for metal wires in a production process of the armor layer 30.

It should be noted that a mechanical property requirement of the submarine cable is determined according to a water depth for laying the submarine cable, so as to determine the number of armored metal wires 31 used in the deep-water section and in the shallow-water section. During design, the number of armored metal wires 31 in the armor layer 30 at different seawater depths can be calculated according to the following method.

It should also be noted that both the deep-water section and the shallow-water section can be composed of areas with different water depths, so the submarine cable in the deep-water section and the submarine cable in the shallow-water section can be composed of several cable sections, and each cable section has a different number of armored metal wires 31.

S101: determining a required tension of the submarine cable.

Specifically, the following calculation formula can be used to determine the required tension of the submarine cable:

when $L \leq 50$:

$$F = (1.3 \times L + 40) \times \left( \left( M - b \times \pi \times \left(\frac{D}{2}\right)^2 \times \rho \right) \times g \right) \qquad (1)$$

when $L > 50$:

$$F = 1.2 \times L \times \left( M - b \times \pi \times \left(\frac{D}{2}\right)^2 \times \rho \right) \times g + K \qquad (2)$$

where L is an actual laying water depth when laying the submarine cable, in m; M is a weight of the submarine cable in air, in kg/m; D is a diameter of the submarine cable, in m; F is a required tension of the submarine cable, in kN; $\rho$ is a seawater density in a water area where the submarine cable is actually laid, in kg/m$^3$; K is a dynamic influence tension of the submarine cable; b is a buoyancy coefficient of the submarine cable.

It should be noted that the buoyancy coefficient of the submarine cable depends on an amount of seawater that can enter the submarine cable. For example, when the submarine cable is a single-core submarine cable, the value range of b is 0.86-0.9. When the submarine cable is a three-core submarine cable, the value range of b is 0.83-0.88. When the submarine cable is not flooded, whether it is a single-core submarine cable or a three-core submarine cable, the value of b is 1

S102: calculating the number of armored metal wires according to the tension.

Specifically, the number of armored metal wires 31 is calculated according to the tension using the following formula:

$$N = \frac{4 \times F}{P \times NC \times \pi \times d^2} \qquad (3)$$

where P is a tensile strength of the armored metal wire 31, in kN/mm$^2$; d is a diameter of the armored metal wire 31, in mm; NC is a safety margin of the armored metal wire 31; n is the number of armored metal wires 31.

When a laying route of a single submarine cable includes different water depths, the number of armored metal wires 31 required in each area can be calculated according to the above calculation method, which can not only meet the tensile strength of the armor layer 30 of the submarine cable in each area, but also meet a requirement of mechanical performance in terms of the water depth for laying in each area, and enable the armor layer 30 of the submarine cable to use a minimum number of metal wires, reducing the cost of the submarine cable and the weight of the submarine cable.

In a specific embodiment, it is assumed that the submarine cable has a specification of 220kV and $3 \times 500$ $mm^2$, the weight of the submarine cable in the air is about 106 kg/m, the outer diameter of the submarine cable is about 245 mm, and the armored metal wire 31 is a galvanized low carbon steel wire with a nominal diameter of 6 mm. If the existing dense-type armor layer is used, about 112 galvanized low-carbon steel wires are required. Since the tensile strength of the steel wire is about 340 $N/mm^2$, and the safety factor NC is assumed to be 0.25, a maximum allowable drag force of the submarine cable is about 300 kN, a maximum water depth for laying the submarine cable which meets the requirements can be inversely calculated as 357 meters.

When a same armored submarine cable with 220kV and $3 \times 500$ $mm^2$ adopts the above differentiated armored structure, actual water depths for laying the submarine cable are L1=100 m for the deep-water section and L2=50 m for the shallow-water section. It is assumed that the number of armored steel wires n1=112×100/357=31 in the case of a 100-meter water depth, then the weight of the submarine cable M=92 kg/m, an outer diameter is 246 mm. Further, since the armor layer 30 of this embodiment is wrapped with a sheath 32, a value of b is 1, a required tension of the submarine cable F=56.7 kN is calculated according to formula (1).

Then, according to formula (3), it can be calculated that the number of steel wires in the submarine cable $n'_1 \approx 22$, so $n'_1 < n1$, then n2=30, perform iterative calculation again according to the above calculation steps until $n'_i = ni$.

Through the above calculation way, it can be calculated that when adopting a differentiated armored structure, if L1=100m for the deep-water section, the number of armored metal wires 31 of the armor layer 30 at this position is 21, and the weight of the submarine cable is 90.3 kg/m; if L2=50 m for the shallow-water section, the number of armored metal wires 31 of the armor layer 30 at this position is 10, and the weight of the submarine cable is 88.1 kg/m.

It should be noted that the material of the armored metal wire 31 in the deep-water section and the material of the armored metal wire 31 in the shallow-water section can be the same, or the material of the armored metal wire 31 in the deep-water section and the material of the armored metal wire 31 in the shallow-water section can be different.

It should also be noted that the armored metal wires 31 in the deep-water section outnumber the armored metal wires 31 in the shallow-water section, so the armored metal wires 31 used in the armor layer 30 in the deep-water section includes a first part and a second part in terms of number. The number for the first part is the same as the number of armored metal wires 31 used in the armor layer 30 in the shallow-water section, and the deep-water section and the shallow-water section share armored metal wires 31 in this part, ends of the armored metal wires 31 in the second part are welded with the armored metal wires 31 in the first part.

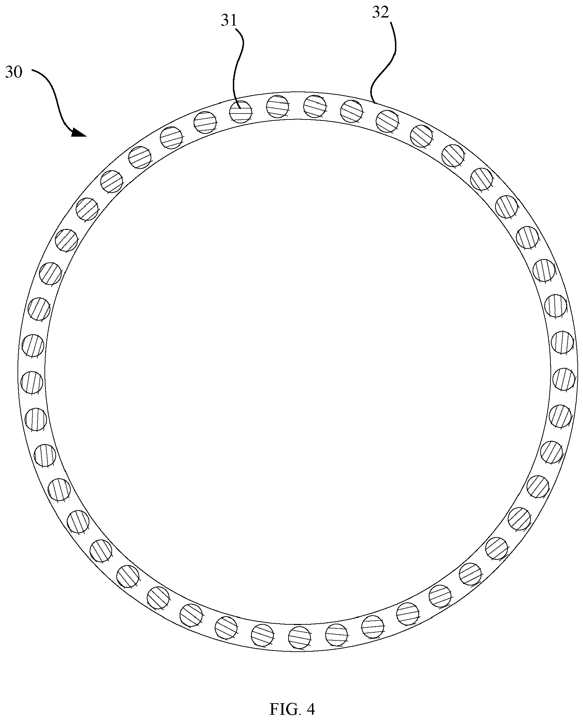

FIG. 4 is a sectional view of an armor layer according to a present embodiment.

As shown in FIG. 4, since the number of armored metal wires 31 is determined according to the seawater depth at the position of the submarine cable, the number of armored metal wires 31 used will be relatively small, so there will be a gap between two adjacent armored metal wires 31. In other words, the armor layer wraps the inner bedding layer 28 with multiple armored metal wires 31 in a loose manner.

With continued reference to FIG. 4, the submarine cable further includes a sheath 32. The sheath 32 is extruded outside the armor layer 30 and partially embedded in a gap between two adjacent armored metal wires 31. The sheath 32 can make no gap between the armored metal wires 31, so as to compress the armored metal wires 31. At the same time, the sheath 32 can improve the water-blocking and anti-corrosion performance of the armor layer 30.

The sheath 32 is formed by semi-conducting polyethylene and is extruded on the armored metal wires 31 to wrap the armored metal wires 31.

In order to prevent the multiple armored metal wires 31 that are loosely arranged from an arching phenomenon when extruding the sheath 32, during an armoring process, the tension of the armored metal wire 31 can be increased, and a wrapping tape can be wound around the armored metal wires 31 so that the armored metal wires 31 are tightly wound around the inner bedding layer 28, and then the wounded wrapping tape can be removed before entering the extruder head. For the submarine cable processed in this way, the material of the sheath 32 is fully integrated with the armored metal wires 31, so as to better fill the gap between the armored metal wires 31. It should be pointed out that the thickness of the sheath 32 is greater than the diameter of the armored metal wire 31. Considering the economy cost of materials, it is proper that the thickness of sheath 32 is 1 mm-2 mm greater than the diameter of armored metal wire 31.

As shown in FIG. 2 and FIG. 3, in an optional implementation manner, an optical unit 41, and an outer serving layer 29 wrapping the armor layer 30 are further included.

Schematically, the outer serving layer 29 is polypropylene PP rope wound around the armor layer 30.

It should be noted that when the submarine cable is a single-core submarine cable, the optical unit 41 is embedded in the optical unit filling layer 27. When the submarine cable is a three-core submarine cable, the optical unit 41 is arranged in a gap among the three power cable cores.

The optical unit 41 includes an optical core and a protective sheath wrapping the optical core. The optical core includes an optical fiber, a loose tube, and a water-blocking fiber paste, and the polyethylene sheath is extruded outside the optical core and/or the armored metal wires are wound around the optical core.

In so far, the technical solution of the present invention has been described in combination with the shown preferred embodiments in combination with the accompanying drawings. However, it is easy for those skilled in the art to understand that the protection scope of the present invention is obviously not limited to these specific embodiments. On the premise of not deviating from the principle of the present invention, those skilled in the art can make equivalent changes or substitutions to relevant technical features, and the technical solutions after these changes or substitutions will fall into the protection scope of the present invention.

**Claims**

1. A submarine cable, comprising a plurality of core wires that are stranded together,

   wherein each of the core wires comprises a first metal wire and a conductive layer wrapping the first metal wire; wherein an electrical conductivity of the conductive layer is greater than an electrical conductivity of the first metal wire.

2. The submarine cable according to claim 1, wherein the first metal wire is formed by copper or aluminum; wherein the conductive layer is a silver-plating layer.

3. The submarine cable according to claim 1, wherein the first metal wire has a diameter of 2 mm to 5 mm; and the conductive layer has a thickness of 0.01 mm to 0.003 mm.

4. The submarine cable according to any one of claims 1 to 3, further comprising a water-blocking medium filled in a strand gap between stranded core wires.

5. The submarine cable according to claim 4, wherein the water-blocking medium is at least one of a water-blocking tape, a water-blocking yarn, a water-blocking glue, or a water-blocking powder.

6. The submarine cable according to claim 5, wherein the submarine cable comprises a deep-water section for placement in deep water and a shallow-water section for placement in shallow water along a length direction of the core wire, and a strand gap between stranded core wires in the deep-water section and a strand gap between stranded core wires in the shallow-water section are filed with different water-blocking mediums.

7. The submarine cable according to claim 6, wherein a strand gap of the deep-water section is filled with the water-blocking glue, and a strand gap of the shallow-water section is filled with at least one of the water-blocking tape, the water-blocking yarn, or the water-blocking powder.

8. The submarine cable according to any one of claims 1 to 6, further comprising a conductor shield layer wrapping the stranded core wires, an insulation layer wrapping the conductor shield layer, an insulation shield layer wrapping the insulation layer, a longitudinal water-blocking layer wrapping the insulation shield layer, a metal shield layer wrapping the longitudinal water-blocking layer, a non-metallic sheath layer wrapping the metal shield layer, an optical unit filling layer wrapping the non-metallic sheath layer, and an inner bedding layer wrapping the optical unit filling layer.

9. The submarine cable according to claim 8, wherein the conductor shield layer is formed by semi-conducting polyethylene or semi-conducting polypropylene, and the semi-conducting polyethylene or the semi-conducting polypropylene is extruded outside the stranded core wires; or, the conductor shield layer is formed by a combination of a water-blocking tape and semi-conducting polyethylene or a combination of a water-blocking tape and semi-conducting polypropylene, and the water-blocking tape is lapped outside the stranded core wires;

   wherein the insulation layer is formed by cross-linked polyethylene or polypropylene, and the cross-linked polyethylene or polypropylene is extruded outside the conductor shield layer to wrap the conductor shield layer; wherein the insulation shield layer is formed by semi-conducting polyethylene or semi-conducting polypropylene, and the insulation shield layer is extruded outside the insulation layer to wrap the insulation layer; wherein the longitudinal water-blocking layer is formed by a semi-conducting water-blocking tape, and the longitudinal water-blocking layer is lapped outside the insulation shield layer to wrap the insulation shield layer; wherein the metal shield layer is formed by aluminum alloy, and the aluminum alloy is extruded outside the longitudinal water-blocking layer to wrap the longitudinal water-blocking layer; or the metal shield layer is formed by a copper tape or a combination of a copper wire and the copper tape, the copper tape is lapped outside the longitudinal water-blocking layer to wrap the longitudinal water-blocking layer, and the copper wire is wound around the longitudinal water-blocking layer;

wherein the non-metallic sheath layer is formed by semi-conducting polyethylene, insulation polyethylene, a combination of a composite aluminum-plastic tape and insulation polyethylene, or a combination of a composite copper-plastic tape and insulation polyethylene, and the non-metallic sheath layer is extruded outside the metal shield layer;

wherein the optical unit filling layer is formed by an annular polyethylene strip;

wherein the inner bedding layer is a polypropylene (PP) rope wound around the optical unit filling layer.

10. The submarine cable according to claim 8 or 9, further comprising an armor layer wrapping the inner bedding layer; the submarine cable comprises a deep-water section for placement in deep water and a shallow-water section for placement in shallow water, wherein the shallow-water section and the deep-water section are both stranded by a plurality of armored metal wires, the armored metal wires used in the armor layer of the deep-water section outnumber the armored metal wires used in the armor layer of the shallow-water section.

11. The submarine cable according to claim 10, further comprising a sheath; wherein the sheath is extruded outside the armor layer and partially embedded in a gap between two adjacent armored metal wires.

FIG. 1

EP 4 174 879 A1

FIG. 2

11

FIG. 3

FIG. 4

## INTERNATIONAL SEARCH REPORT

| International application No. |
| --- |
| **PCT/CN2021/128802** |

| | |
| --- | --- |
| **A.    CLASSIFICATION OF SUBJECT MATTER** | |
| H01B 7/14(2006.01)i | |
| According to International Patent Classification (IPC) or to both national classification and IPC | |

| |
| --- |
| **B.    FIELDS SEARCHED** |
| Minimum documentation searched (classification system followed by classification symbols) |
| H01B |
| Documentation searched other than minimum documentation to the extent that such documents are included in the fields searched |
| Electronic data base consulted during the international search (name of data base and, where practicable, search terms used) |
| WPI, EPODOC, CNPAT, CNKI: 海底, 水下, 电缆, 镀银, 铜, 铝, 导体屏蔽, 绝缘屏蔽, 阻水, 深水, 浅水, 铠装, water, sea, cable, silver, Ag, plat+, Cu, Al, shield+, armour |

| | | |
| --- | --- | --- |
| **C.    DOCUMENTS CONSIDERED TO BE RELEVANT** | | |
| Category* | Citation of document, with indication, where appropriate, of the relevant passages | Relevant to claim No. |
| X | CN 113096874 A (ANHUI DUJIANG CABLE GROUP CO., LTD.) 09 July 2021 (2021-07-09)<br>    description, paragraphs [0002]-[0024], and figure 1 | 1-11 |
| A | CN 210575192 U (JIANGSU ZHONGCHAO CABLE CORP.) 19 May 2020 (2020-05-19)<br>    entire document | 1-11 |
| A | CN 103680754 A (ZHONGTIAN TECHNOLOGY SUBMARINE CABLES CO., LTD.) 26 March 2014 (2014-03-26)<br>    entire document | 1-11 |
| A | CN 112735635 A (ZHONGTIAN TECHNOLOGY SUBMARINE CABLES CO., LTD.) 30 April 2021 (2021-04-30)<br>    entire document | 1-11 |
| A | US 5125062 A (ALCATEL CABLE) 23 June 1992 (1992-06-23)<br>    entire document | 1-11 |

| | | |
| --- | --- | --- |
| ☐ Further documents are listed in the continuation of Box C. | ☑ See patent family annex. | |

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| | |
| --- | --- |
| Date of the actual completion of the international search | Date of mailing of the international search report |
| **18 April 2022** | **25 April 2022** |
| Name and mailing address of the ISA/CN | Authorized officer |
| **China National Intellectual Property Administration (ISA/ CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/128802**

| Patent document cited in search report | | | Publication date (day/month/year) | Patent family member(s) | | | Publication date (day/month/year) |
|---|---|---|---|---|---|---|---|
| CN | 113096874 | A | 09 July 2021 | None | | | |
| CN | 210575192 | U | 19 May 2020 | None | | | |
| CN | 103680754 | A | 26 March 2014 | None | | | |
| CN | 112735635 | A | 30 April 2021 | None | | | |
| US | 5125062 | A | 23 June 1992 | JP | H04229908 | A | 19 August 1992 |
| | | | | CA | 2047346 | A1 | 20 January 1992 |
| | | | | EP | 0467294 | A1 | 22 January 1992 |
| | | | | CA | 2047345 | A1 | 20 January 1992 |
| | | | | EP | 0467293 | A1 | 22 January 1992 |
| | | | | AU | 8032491 | A | 23 January 1992 |
| | | | | FR | 2664987 | A1 | 24 January 1992 |
| | | | | US | 5125061 | A | 23 June 1992 |

Form PCT/ISA/210 (patent family annex) (January 2015)

**REFERENCES CITED IN THE DESCRIPTION**

**Patent documents cited in the description**

- CN 202111076138